# EUROPÄISCHE PATENTSCHRIFT

(11) **EP 0 657 629 B1**
(45) Veröffentlichungstag und Bekanntmachung des Hinweises auf die Patenterteilung: **25.02.1998**
(21) Anmeldenummer: 94119028.2
(22) Anmeldetag: 02.12.1994
(51) Int. Cl.: F01L 1/32, F01L 3/02

(54) **Gaswechselventil für eine Brennkraftmaschine**
Valve for an internal combustion engine
Soupape pour moteur à combustion interne

(30) Priorität: 08.12.1993 DE 4341811
(43) Veröffentlichungstag der Anmeldung: 14.06.1995
(73) Patentinhaber: M.A.N. - B&W Diesel GmbH, 86153 Augsburg (DE)
(72) Erfinder: Stefanik, Werner, D-86609 Donauwörth (DE); Suchma, Antonin, D-86936 Klosterlechfeld (DE)
(74) Vertreter: Schober, Stefan

(56) Entgegenhaltungen:
- EP-A- 0 535 888
- DE-C- 673 348
- GB-A- 453 201

## Beschreibung

Die Erfindung betriffl ein Gaswechselventil, insbesondere ein Auslaßventil einer Brennkraftmaschine, gemäß dem Oberbegriff des Anspruchs 1.

Ein Ventil, insbesondere in Auslaßventil zum Öffnen und Schließen des Gaskanals der Brennkraftmaschine ist großen mechanischen und thermischen Beanspruchungen und Korrosionsangriffen durch die Verbrennungsprodukte ausgesetzt.

Bekanntlich läßt sich bei hochbelasteten Motoren, insbesondere bei 4-Takt-Dieselmotoren, die Lebensdauer eines Gaswechselventils durch den Einbau einer Drehvorrichtung, die das Ventil während des Betriebes dreht, um ein Mehrfaches verlängern.

Gemäß der DE-AS 21 61 306, oder auch wie in der GB-A-453 201 gezeigt, drückt die Ventilfeder bei einer am oberen Ende des Ventils angeordneten Drehvorrichtung eine Tellerfeder der Drehvorrichtung eben, sobald das Ventil geöffnet wird. Kugeln rollen auf ihrer Bahn und drehen das Ventil ein Stück um seine Achse. Durch diese Zwangsdrehung bleiben Ventilschaftende und Teller frei von Ablagerungen, und es kann keine einseitige Erwärmung den Teller undicht werden lassen.

Oder aber der Ventilteller wird, wie z. B. in der DE-OS 2 119 596 gezeigt, bei einer anderen bekannten Drehvorrichtung durch einen am Schaft angebrachten Propeller, bzw. aufgeschrumpften Flügelbuchse gedreht, wobei der Propeller durch das ausströmende Abgas angeregt wird. Diese Drehvorrichtung ist einfach und wirksam, da sie vor allem auch noch beim Aufsetzen des Ventils sowie Drehimpuls vorgibt, daß die sich bildenden dünnen Oberflächenschichten abgerieben werden.

Diese Propeller werden derzeit mittels der unterschiedlichsten Techniken, wie z. B. mittels einer Pressverbindung, durch Querstifte, oder wie oben schon erwähnt, eben durch Aufschrumpfen am Ventilschaft befestigt.

Bei allen diesen bekannten Befestigungstechniken besteht jedoch die Möglichkeit, daß bei thermischer Überbelastung des Ventils oder bei deutlich unterschiedlichen Temperaturen am Schaft und am Propeller diese versagen könnten und die Befestigung sich lösen könnte. Im ungünstigsten Fall kann es dadurch zum Abbruch des Ventilkegels kommen, ein größerer Motorschaden wäre die Folge.

Ein weiterer Gesichtspunkt bei der Ausbildung eines Gaswechselventils ist, daß bekanntlich nur hochlegierte Stähle großer Warmfestigkeit und guter Zunderbeständigkeit den hohen Belastungen des Auslaßventils gewachsen sind. Oft wird zur Erhöhung seiner Lebensdauer der Ventilteller am der Dichtfläche mit einer besonders widerstandsfähigen Hartmetall-Legierung durch Auftragsschweißen gepanzert.

Doch auch die anderen Teile des Ventils sind unterschiedlichen Anforderungen hinsichtlich Warm-, Dauer- und Korrosionsfestigkeit unterworfen.

Die DE-C-673 348 behandelt ein Auslaßventil mit Rippen zwischen Ventilkopf und - schaft, die die Festigkeit und die Ventilkühlung bezwecken. Die Kanten dieser Rippen schließen zur Verstärkung den Teller des Ventils unmittelbar an den Schaft an.

Aufgabe der vorliegenden Erfindung ist es, ein gattungsbildendes Gaswechselventil dahingehend weiterzubilden, daß eine sichere Befestigung des Propellers am Ventilschaft auch bei extrem hohen Belastungen sichergestellt ist.

Diese Aufgabe wird durch die kennzeichnenden Merkmale des Anspruchs 1 für ein Gaswechselventil der gattungsgemäßen Art gelöst.

Dadurch, daß in vorteilhafter Weise der Ventilteller aus einem hochtemperaturfestem Werkstoff hergestellt ist und der Ventilschaft mitsamt dem Propeller aus einem Werkstoff mit geringer Kerbempfindlichkeit und hoher Dauerfestigkeit besteht, können zudem durch gezielte Werkstoffauswahl unterschiedliche Anforderungen an verschiedene Ventilteile berücksichtigt werden.

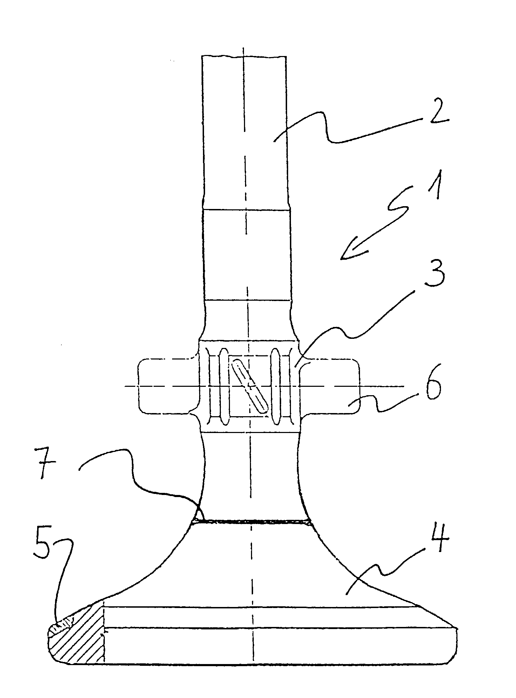

Die Erfindung wird anhand der einzigen Figur erläutert:

Das Gaswechselventil, insbesondere ein Auslaßventil 1 für eine Brennkraftmaschine weist eine Drehvorrichtung in Form eines auf ihrem Ventilschaft 2 angeordneten Propellers 3 auf. Der Ventilteller 4 ist an seiner Dichtlfäche 5 gepanzert.

Das besondere an diesem Propeller 3 ist, daß er in Form seiner radialen Hüllkurve aus einem Rohling für die Herstellung des Ventilschaftes 2 gedreht, also der Ventilschaft 2 mitsamt dem Propeller 3 aus einem gemeinsamen Rohling gefertigt ist.

Die Flügel 6 des Propellers 3 sind aus der Drehform des Propellers herausgefräst. Zumindest Schaft 2 und Propeller 3 mitsamt seinen Flügeln 6 sind also einteilig gefertigt.

Es ist jedoch denkbar, auch den Ventilteller 4 anzuschmieden, so daß die Teile 2, 3, 4 und 6 eine Einheit bilden.

Desweiteren werden unterschiedliche Anforderungen hinsichtlich Warm-, Dauer- und Korrosionsfestigkeit an den verschiedenen Temperaturzonen des Ventils 1 dadurch berücksichtigt, daß der Ventilteller 4 aus einem hochtemperatur- und abbrandfesten Werkstoff hergestellt ist, während der Ventilschaft 2 mitsamt dem Propeller 3 aus einem Werkstoff mit geringer Kerbempfindlichkeit und hoher Dauerfestigkeit besteht, d. h. eine ausreichende Zähigkeit aufweist um den in diesem Bereich auftretenden Biegespannungen zu begegnen.

Vorzugsweise wird für den Ventilteller 4 ein Material aus einem typischen Ventilstahl oder aus einer Superlegierung, wie z. B. NiCr 30 TiAl und für den Ventilschaft 2 mit Propeller 3 ein Werkstoff aus einem Warmarbeitsstahl, wie z. B. X38 CrMo V5.1V verwendet.

Der Ventilteller 4 ist mit dem Ventilschaft 2 durch eine Reibschweißung 7 verbunden. Die rotationssymmetrischen Teile 2 und 4 werden einer hochtourigen Drehvorrichtung aneinander gepreßt, wobei das eine Teil festgehalten wird, während das andere Teil sich dreht. Nach ausreichender Erwärmung wird der Kraftschluß des Antriebs aufgehoben und die Teile 2 und 4 werden durch Druck miteinander verbunden.

## Patentansprüche

1. Gaswechselventil, insbesondere ein Auslaßventil einer Brennkraftmaschine mit einer Drehvorrichtung in Form eines am Ventilschaft angeordneten Propellers, wobei zumindest der Ventilschaft (2) mitsamt dem Propeller (3) aus einem gemeinsamen Rohling gefertigt ist,
**dadurch gekennzeichnet, daß**
der Propeller (3) in Form seiner radialen Hüllkurve aus diesem Rohling für den Ventilschaft (2) gedreht ist und mittels Fräsen die Flügel (6) aus der Drehform des Propellers (3) herausgearbeitet sind und daß der Ventilteller (4) aus einem hochtemperaturfesten Werkstoff hergestellt ist, der Ventilschaft (2) mitsamt dem Propeller (3) aus einem Werkstoff mit geringer Kerbempfindlichkeit und hoher Dauerfestigkeit besteht.

2. Gaswechselventil nach Anspruch 1, **dadurch gekennzeichnet, daß** der Ventilteller (4) an den Ventilschaft (2) mit Propeller (3) angeschmiedet ist.

3. Gaswechselventil nach Anspruch 1, **dadurch gekennzeichnet, daß** der Ventilteller (4) aus einem typischen Ventilstahl besteht.

4. Gaswechselventil nach Anspruch 1, **dadurch gekennzeichnet, daß** der Ventilteller (4) aus einer Superlegierung, insbesondere aus NiCr 30 TiAl besteht.

5. Gaswechselventil nach Anspruch 1, **dadurch gekennzeichnet, daß** der Ventilschaft (2) mitsamt dem Propeller (3) aus einem Warmarbeitsstahl, insbesondere aus X 38 CrMo V 5.1V besteht.

6. Gaswechselventlil nach Anspruch 1, **dadurch gekennzeichnet, daß** der Ventilteller (4) mit dem Ventilschaft (2) durch eine Reibschweißung (7) verbunden ist.

## Claims

1. Gas change-over valve, in particular an exhaust valve of an internal combustion engine having a rotary device in the form of a propeller arranged on the valve shaft, at least the valve shaft (2) together with the propeller (3) being produced from a common blank, **characterised in that**
the propeller (3) is turned in the form of its radial envelope curve from this blank for the valve shaft (2), and the blades (6) are machined by means of milling from the rotary form of the propeller (3), and in that the valve disc (4) is produced from a high temperature resistant material, and the valve shaft (2) together with the propeller (3) is made of a material with low susceptibility to notch impacts and high durability.

2. Gas change-over valve according to claim 1, **characterised in that** the valve disc (4) is forged onto the valve shaft (2) with the propeller (3).

3. Gas change-over valve according to claim 1, **characterised in that** the valve disc (4) is made of a typical valve steel.

4. Gas change-over valve according to claim 1, **characterised in that** the valve disc (4) is made of a super alloy, in particular NiCr 30 TiAl.

5. Gas change-over valve according to claim 1, **characterised in that** the valve shaft (2) together with the propeller (3) is made of a hot-worked steel, in particular X 38 CrMo V 5.1V.

6. Gas change-over valve according to claim 1, **characterised in that** the valve disc (4) is connected to the valve shaft (2) by a friction weld (7).

## Revendications

1. Soupape, notamment une soupape de moteur à combustion interne munie d'un vireur se présentant sous la forme d'une hélice disposée sur la tige de soupape, dans laquelle au moins la tige de soupape (2) ainsi que l'hélice (3) sont fabriquées à partir d'une ébauche commune,
caractérisée en ce que l'hélice (3), sous la forme de son enveloppante radiale, est réalisée par tournage à partir de cette ébauche pour la tige de soupape (2) et les pales (6) sont réalisées par fraisage à partir de l'ébauche tournée de l'hélice (3) et en ce que la tête de soupape (4) est fabriquée à partir d'une matière hautement réfractaire et la tige de soupape (2) conjointement à l'hélice (3) est faite d'une matière très peu sensible à l'effet d'entaille et présentant une endurance élevée.

2. Soupape selon la revendication 1, caractérisée en ce que la tête de soupape (4) est rapportée par forgeage sur la tige de soupape (2) comportant l'hélice (3).

3. Soupape selon la revendication 1, caractérisée en ce que la tête de soupape (4) est fabriquée à partir d'un acier à soupapes type.

4. Soupape selon la revendication 1, caractérisée en ce que la tête de soupape (4) est réalisée à partir d'un superalliage, notamment en NiCr 30 TiAI.

5. Soupape selon la revendication 1, caractérisée en ce que la tige de soupape (2) conjointement à l'hélice (3) est faite d'un acier pour travail à chaud, notamment en X38 CrMo V 5.1V.

6. Soupape selon la revendication 1, caractérisée en ce que la tête de soupape (4) est assemblée avec la tige de soupape (2) par une soudure par friction (7).
